## Europäisches Patentamt
## European Patent Office
## Office européen des brevets

(19)

(11) Publication number: **0 054 891**
A2

(12)

# EUROPEAN PATENT APPLICATION

(21) Application number: **81110461.1**

(22) Date of filing: **15.12.81**

(51) Int. Cl.³: **B 32 B 5/18, F 24 J 3/02**

(30) Priority: **18.12.80 IT 2671980**

(43) Date of publication of application: **30.06.82**
**Bulletin 82/26**

(84) Designated Contracting States: **AT DE FR GB**

(71) Applicant: **INDUSTRIE PIRELLI S.p.A., Piazzale Cadorna, 5, I-20123 Milan (IT)**

(72) Inventor: **Brollo, Aurelio, Viale Piceno, 14/A, Milan (IT)**
Inventor: **Mancosu, Federico, Via Friuli, 63, Milan (IT)**

(74) Representative: **Dr. E. Wiegand Dipl.-Ing. W. Niemann Dr. M. Kohler, Dipl.-Ing. C. Gernhardt Dipl.-Ing. J. Glaeser Patentanwälte Herzog-Wilhelm-Strasse 16, D-8000 München 2 (DE)**

(54) **Solar wall and process for manufacturing it.**

(57) The invention comprises a laminate formed by two thin sheets (3 and 20 or 26 and 37) of rigid material doubled together with the interpositioning of a layer (5 or 28) of foam material. A solar absorber (21 or 30) comprised by a sheet of elastomeric material in which there are present a plurality of conduits (22 or 31) extending therethrough debouching into collecting conduits (23 or 32) is embedded in correspondence of one side of the foam material layer.

EP 0 054 891 A2

## SOLAR WALL AND PROCESS FOR MANUFACTURING IT

The present invention refers to a solar wall, i.e. to a wall apt for the realization of civil and industrial buildings and capable of converting the solar energy that is incident on it, into heat stored in a fluid that flows inside conduits made in the wall itself.

What is also intended as being comprised by the present invention are modular panels that can be placed adjacent to one another so as to give raise to solar walls in civil and industrial buildings in which there are present conduits within which there can be made to flow a fluid that is heated by the solar radiations incident on the modular panels themselves.

More particularly, by the term "solar wall" is intended a slab shaped element which, when installed, is substantially subject to static stresses acting in the vertical direction or in a direction which differs slightly therefrom, whereas static stresses acting in the horizontal direction are practically non-existent, which stresses would exist in other slab shaped elements which in a civil and industrial building form floors, ceilings, roofs and the like.

The present invention further refers to a process for manufacturing solar walls and hence also to modular panels for the solar walls forming the object of the present invention.

Known solar walls exist, which are able to transform the solar energy incident on them into heat stored in a fluid flowing through the conduits made in them but said solar walls present a low efficiency in the energy transformation, and moreover they prove to be rather

2

0054891

weighty and hence difficult to install, and they also involve very complex constructions, which are therefore costly.

Moreover, even the "known" manufacturing processes for solar walls result as being very complex, and for this reason they involve high production costs, which increase the cost for the known solar walls.

One aim of the present invention is to provide a solar wall for civil and/or industrial buildings which does not present the drawbacks of the known solar walls, i.e. which presents a high output of energy transformation, and which is lightweight and also low costing.

Another aim of the present invention is to provide a process for manufacturing solar walls according to the present invention which process proves to be very simple so as not to cause high costs for the products obtained by this process.

What forms an object of the present invention is a solar wall characterized by the fact of comprising a sheet of rigid material, a layer of foam material fixed to the sheet of rigid material, a solar absorber embedded in correspondence of the side of the foam material facing the side contacting the sheet of rigid material, a covering sheet for the side of the layer of foam material, means for connecting the covering sheet to the remaining part of the solar wall, and means for connecting said solar wall to a supporting framework.

A further object of the present invention is a process for manufacturing solar walls, characterized by the fact of comprising the phases of:

- doubling at a constant distance from one another a sheet of rigid material, preferably metallic, and a solar absorber under the form of an elastomeric or plastic plate in which are present through-conduits;
- pouring expansible material in the space comprised between said sheet and said absorber; and
- causing to expand the expansible material poured in during the previous phase.

The present invention will be better understood from the following detailed description given solely by way of non-limiting example with reference to the FIGURES of the attached drawing, wherein:

FIG. 1 shows a perspective view of a solar wall according to the invention;

FIG. 2 shows in cross section an enlarged view of a solar wall according to the invention;

FIG. 3 shows a perspective view - with parts removed for better showing the structure - of a solar wall according to the invention and according to a variation of the realization;

FIG. 4 shows in perspective view a detail of a solar wall according to the present invention.

In the more general solution idea of providing a solar wall according to the present invention the solar wall comprises a laminate formed by a sheet of rigid material for example of metallic material, to one face of which is doubled and joined in a stable way a layer of foam material embedding in correspondence of its one side that is not stably connected to the sheet of rigid material, a solar absorber of the type comprising a slab of elastomeric or plastic material wherein are present a plurality of through-conduits that are parallel to each other and parallel to one side of the slab itself, and two collecting conduits fixed one at each side perpendicular to the through-conduits from which they debouch. Moreover, still according to the general solution idea of a solar wall according to the present invention there is foreseen a covering sheet for the face of the layer of foam material in which the solar absorber is incorporated.

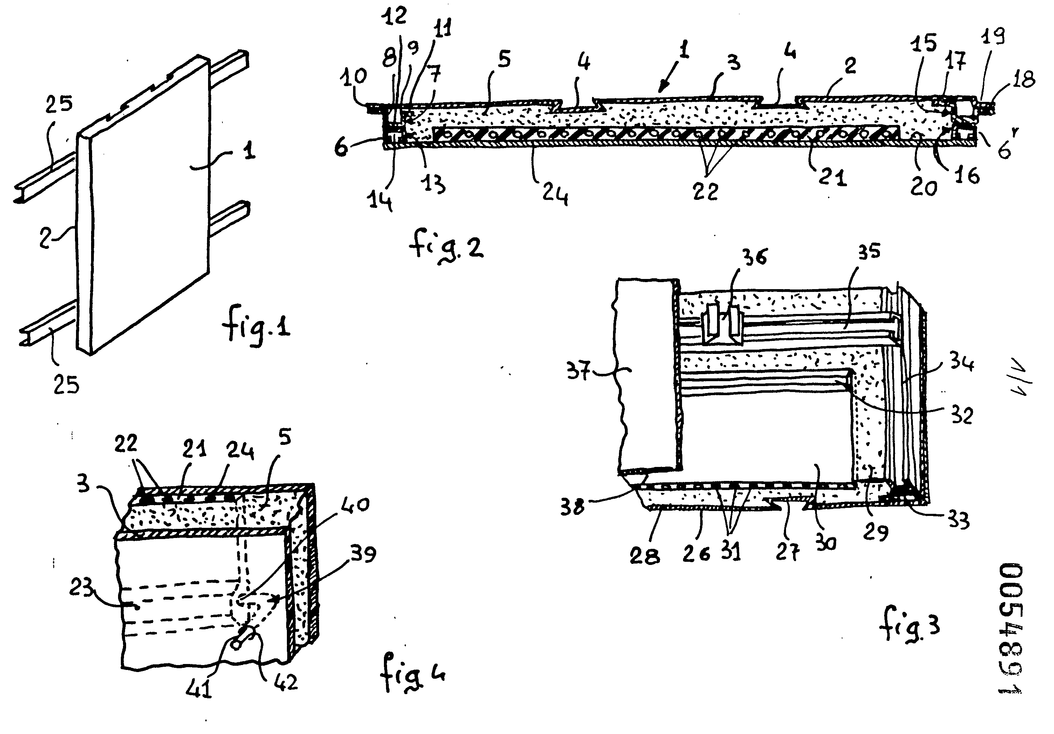

In FIGURES 1 and 2 there is shown a particular form of realization of a solar panel according to the present invention.

As can be seen in FIGURES 1 and 2 the solar wall 1 comprises, starting from the face 2 of the same, which is intended for being turned towards the inside of the building incorporating the wall, a sheet 3 of rigid material, preferably of metallic material, which therefore is practically inextensible under the effects of tensional stresses which present embossings 4 having a dovetailed shape.

To the sheet 3 of rigid material there is doubled in such a way as to result stably joined, a layer 5 of foam material, preferably of polyurethane foam. However also other foam materials can be used for forming the layer 5.

In correspondence of the lateral borders 6 and 6' of the foam material layer 5 there are present rigid material profiles, preferably of metallic material.

More particularly, in correspondence of border 6 there is present a U-shaped profile 7 which presents at the ends of its legs 8 and 9, where the leg 8 has a width that is greater to that of the leg 9, cantilevered fins lo and 11, respectively, which are parallel to the base 12 of the U-shaped profile 7 and which are turned up in such a way as not to occupy the U-shaped groove of the profile 7.

Moreover, the fin lo has a greater width than the fin 11, and said fin lo is in direct contact with the rigid material sheet 3 in correspondence of the border of said sheet 3.

Always in correspondence of the border 6 there is present another U-shaped profile 13 connected through its base 14 to the base 12 of the profile 7.

In correspondence of the border 6' there are present a pair of profiles 15 and 16, where the profile 16 is identical to the profile 13, while the profile 15 which is equal to profile 7, is oriented in the same way as the latter, but it is in contact with the sheet 3 through both of its fins 17 and 18 which correspond respectively to the fins lo and 11 and for which the sheet 3 of rigid material presents in correspondence of its edge near the border 6' a step 19 that re-enters into the wall itself.

In correspondence of the face 2o of the foam material layer 5 there is embedded a solar absorber 21 consisting of a slab of elastomeric or plastic material in which there are present a plurality of conduits 22 extending therethrough and debouching into collecting conduits 23 (see FIG. 4) inside of which there is made to pass a fluid which is heated by the solar energy incident on the solar wall 1. Moreover, in the elastomeric or plastic material slab of the solar absorber 21 there are embedded a plurality of wires or small cords (not shown) which confer a non-extensibility to the slab itself when it is subjected to tensional stresses.

In contact with the face of the solar absorber which results visible on the face 2o of the foam material layer 5 and which is in contact with the face 2o of layer 5 that is not occupied by the solar absorber 21, there is present a covering sheet 24 of a rigid metallic material that is fixed by its own borders, parallel to the axis of the conduits 22 of the solar absorber 21, to the U-shaped profiles 13 and 16 with known means such as for example nuts, bolts, welding and the like.

Moreover, the solar wall 1 is equipped with metallic bodies (not shown) having a dovetailed shape which are apt for fitting in the dovetailed grooves formed by the embossings 4 and therefore made in the sheet 3 of rigid material  for forming the connection of the solar wall 1 and with  a  supporting framework that is represented solely by way of non-limiting example, in FIG. 1 by two beams 25.

In FIG. 3 there is represented in a perspective view and with parts partially removed for pointing out the structure a solar wall according to a variation of the invention.

As can be seen in FIG. 3 the solar wall shown in it differs from that shown in FIG. 2 in that the covering sheet is detached from the face of the solar absorber so as to realize an interspace, and in that there are foreseen means for connecting the said covering sheets spaced apart from the solar absorber.

In fact, as can be seen in FIG. 3 the solar wall comprises a sheet of rigid material 26, preferably of metallic material that presents an embossing 27 having a dovetailed shape for connecting said solar wall to a supporting framework. To the sheet 26 there is doubled and stably connected a layer 28 of foam material, and preferably of a polyurethane foam which in correspondence of its face 29 embeds a solar absorber under the form of a slab 3o of elastomeric or plastic material provided with a plurality of conduits 31 extending therethrough and debouching into collecting conduits 32 which are stably fixed to the two sides of the slab 3o that are perpendicular to said conduits 31.

On the edges of the solar wall and parallel to the conduits 31 there are present two profiles 33 and 34 that are identical to the profiles 7, 13 and 15, 16 which are adopted and described for the form of realization represented in FIG. 2.

The profiles 34, present on the two sides that are parallel to each other in the solar wall, are connected to one another by a pair of rigid material profiles 35, one for each side perpendicular to the conduits 31 of the solar absorber, to which are connected by means known per se spacers 36 on which it rests and to which is connected by known means a slab 37 of a material transparent to light which in not being in contact with the face 29 of the polyurethane layer 28 gives raise to an interspace 38.

As said previously, the through-conduits 31 of the absorber debouch into the collecting conduits 38 fixed to those sides of the absorber that are perpendicular to said through-conduits 31. At both the ends of each absorber there are present means for connecting the said absorbers with pipe connectors fixed to the sheet 26 of rigid material faced to the inside of the building when the solar wall is in an operating condition, and in FIG. 4 there is represented a form of realization of said connecting means.

As can be seen in FIG. 4, to each end of each collecting conduit 23 there is fixed in a watertight manner a curved pipe connector 39 one of its ends 4o is inserted in a watertight manner into the cavity of conduit 23, and the other of its ends 41 after having passed through a hole 42 made in the sheet 3 faced towards the inside of the building, and projecting from sheet 3 is connected to conduits (not shown) that connect the solar wall to the circuit of the plant for exploiting the solar energy of which the solar wall forms a component part. In this manner the curved pipe connectors 39 also carry out an action of mechanically mounting the absorber to the various component parts of the solar wall.

For the realization of the solar wall according to the invention there is foreseen the following process which also forms an object of the present invention.

A sheet of rigid material, preferably of metallic material, presenting dovetailed embossings described with reference to FIGURES 2 and 3 and provided on the borders of the sides parallel to said embossings with metallic profiles, is coupled with a solar absorber comprising a slab of elastomeric or plastic material in which there are present conduits extending therethrough in such a way that between them an interspace is formed. Into this interspace there is poured foamable material and preferably foamable polyurethane, and the expansion of said material is carried out, during which phase a bonding between the foam material that assumes the form of a layer, the solar absorber and the previously mentioned sheet of rigid material takes place.

From the preceding description it is easy to comprehend how, with a solar wall according to the invention and with the manufacturing process for solar walls according to the invention it is possible to achieve the proposed aims.

In fact, with a solar wall according to the present invention there is obtained a high output in the transformation of the solar energy into heat which is stored by the fluid passing into the solar absorber, since the layer of foam material in which the solar absorber is embedded, covers the entire surface of the latter that is not turned towards the solar radiations incident, thus impeding any heat losses on the part of the fluid passing into the solar absorber.

Moreover, the solar wall according to the present invention results as being extremely lightweight, seeing that it is constituted substantially by the same foam material which constitutes the thermal insulation of the solar absorber, while the sheet of rigid metallic material that has the function of conferring rigidity to the solar wall, can be of very small thickness and hence it adds only a little to the weight of the solar wall itself.

To end with, the cost of a solar wall according to the invention results as being very low since said solar wall is formed only by the elements necessary for a
correct transformation of the energy to which elements
are also given the task of acting as structural elements
of the wall. Moreover, the manufacturing process of the
solar wall is also a very simple one.

What is more, even if the solar absorber is a slab
which is flexible but practically non-extensible under
tensional stresses, and if the sheet of metallic material is flexible since the thickness is small but even
this sheet being non-extensible under tensional stresses, by coupling one to the other said elements with a
layer of foam material, the formation is obtained of
a double layer structure, i.e. a structure having a
considerable rigidity with regard to flexional stresses.

The obtaining of a structure having a considerable
rigidity to flexional stresses consents for solving
the problem of conferring to a solar wall light weight
and a small thickness without any deformation taking
place through the effects of the stresses applied.

As is known, and as has been previously stated, a
solar wall is subject substantially to stresses lying
in its planes having greater dimensions, or in other
words, it is subject to buckling loads that tend to
laterally flexing the wall itself, even when the load
applied is just constituted by the weight of the solar
wall itself. It results from this that the achieving
of a considerable rigidity in a solar wall according
to the present invention allows to increase, even with
a wall of an extremely reduced thickness and hence
light weight, the buckling load applicable to a solar
wall.

Although certain forms of embodiment according to the

0054891

present invention have been illustrated and described hereabove, it has to be understood that all possible variations of the inventive principle that are available to a technician of the field are comprised within the ambit of the present invention.

WHAT IS CLAIMED IS:

1. Solar wall, characterized by the fact of comprising a sheet (3 or 26) of rigid material, a layer (5 or 28) of foam material fixed to the sheet of rigid material, a solar absorber (21 or 3o) embedded in correspondence of the side of the foam material facing the side contacting the sheet of rigid material, a covering sheet (24 or 37) for the side of the layer of foam material, means for connecting the covering sheet to the remaining part of the solar wall, and means for connecting said solar wall to a supporting framework.

2. Solar wall, according to claim 1, characterized by the fact that the solar absorber (21 or 3o) embedded in correspondence of one face of a layer (5 or 28) of foam material is a slab of elastomeric or plastomeric material in which are present a plurality of conduits (22 or 31) extending therethrough which are parallel to each other and parallel to one side of the slab, there being foreseen two terminal conduits (23 or 32) into which the former conduits (22 or 31) debouch and conduits (39) which connect one of the ends of each terminal conduit with the outer surface of the solar wall, said slab incorporating moreover a plurality of wires and small cords.

3. Solar wall, according to claim 1, characterized by the fact that the covering sheet (24) is a sheet of metallic material directly in contact with the solar absorber (21) and that the means for connecting said covering sheet to the wall consist of profiles forming the edge of the solar wall, parallel to the conduits extending therethrough and of bolts for joining the covering sheet to said profiles.

4. Solar wall, according to claim 1, characterized by the fact that the covering sheet (37) is of a material transparent to light that is spaced apart from the solar absorber (3o), and that the connecting means spaced apart from the covering sheet, comprises two profiles (33, 34) anchored to the wall in correspondence of the sides of the wall that are perpendicular to the lay-out of the conduits extending therethrough present in the absorber, and lengths of U-shaped profiles (35) connected to said profile, the covering sheet (37) being directly fixed to the U-shaped profile lengths.

5. Solar wall, according to claim 1, characterized by the fact that the means for anchoring the said solar wall to the supporting framework comprises grooves of dovetailed embossings made in the sheet of rigid material to which the foam material is fixed.

6. Process of manufacturing solar walls, characterized by the fact of comprising the phases of:-

- doubling at a constant distance from one another a sheet of rigid material, preferably of metallic material, and a solar absorber under the form of an elastomeric or plastic plate in which are present conduits extending therethrough;

- pouring expansible material into the space comprised between said sheet and said absorber; and

- causing to expand the expansible material poured-in during the previous phase.

8021

fig.1

fig.2

fig.3

fig.4

1/1

0054891